# EUROPÄISCHE PATENTSCHRIFT

(11) **EP 0 688 543 B1**
(45) Veröffentlichungstag und Bekanntmachung des Hinweises auf die Patenterteilung: **15.12.1999**
(21) Anmeldenummer: 95201525.3
(22) Anmeldetag: 09.06.1995
(51) Int. Cl.: A61C 17/02

(54) **Zahnreinigungseinrichtung mit einem Handstück**
Teeth cleaning device with a hand-piece
Dispositif de nettoyage des dents avec une pièce à main

(30) Priorität: 22.06.1994 AT 123294
(43) Veröffentlichungstag der Anmeldung: 27.12.1995
(73) Patentinhaber: Koninklijke Philips Electronics N.V., 5621 BA Eindhoven (NL)
(72) Erfinder: Häfele, Peter, NL-5656 AA Eindhoven (NL); Poganitsch, Ernst, NL-5656 AA Eindhoven (NL)
(74) Vertreter: Rolfes, Johannes Gerardus Albertus

(56) Entgegenhaltungen:
- EP-A- 0 229 207
- EP-A- 0 383 070
- DE-A- 3 012 285
- PATENT ABSTRACTS OF JAPAN vol. 016 no. 310 (C-0960) ,8.Juli 1992 & JP-A-04 089046 (MIKURON:KK) 23.März 1992,
- PATENT ABSTRACTS OF JAPAN vol. 015 no. 484 (C-0892) ,9.Dezember 1991 & JP-A-03 210253 (MICRON:KK) 13.September 1991,

## Beschreibung

Die Erfindung bezieht sich auf eine Zahnreinigungseinrichtung mit einem Mundstück und mit einem Handstuck, das einen Fluidkanal zum Zuführen von Fluid zu dem Mundstuck aufweist und das mit einer Fluidmengenregeleinrichtung versehen ist, die mit Hilfe einer zwischen verschiedenen Einstellpositionen verstellbaren Einstelleinrichtung einstellbar ist und mit der entsprechend den Einstellpositionen der Einstelleinrichtung die durch den Fluidkanal dem Mundstück zugeführte Fluidmenge veränderbar ist.

Eine solche Zahnreinigungseinrichtung gemäß der vorstehend im ersten Absatz angeführten Gattung ist beispielsweise aus der DE-A1-30 12 285 bekannt. Bei der bekannten Zahnreinigungseinrichtung handelt es sich um eine Munddusche, deren Handstück als Einstelleinrichtung ein zwischen verschiedenen Einstellpositionen verdrehbares Einstellrad trägt, das mit einem verdrehbaren Ventilküken eines als Fluidmengenregeleinrichtung vorgesehenen Ventils verbunden ist, wobei mit dem Ventilküken durch Verdrehen desselben mittels des Einstellrades eine in einer bestimmten Zeitspanne durch den Fluidkanal fließende, dem Mundstück der Munddusche zugeführte, für einen normalen Reinigungsvorgang ausreichende Fluidmenge einstellbar ist, um diese gegenüber einer möglichen Maximalfluidmenge reduzierte, vom Benützer gewünschte Fluidmenge dem Mundstück der Munddusche zuzuführen. Um dem Mundstück nach einem mit Hilfe des Einstellrades durchgeführten Einstellen einer gewünschten Fluidmenge eine erhöhte Fluidmenge zuzuführen, um beispielsweise besonders hartnäckige Speisereste zu entfernen, muß bei der bekannten Munddusche das Einstellrad am Handstück aus einer zuvor eingestellten Einstellposition für eine gewünschte Fluidmenge in eine für eine erhöhte Fluidmenge entsprechende Einstellposition verdreht werden, wodurch aber die zuvor eingestellte Einstellposition des Einstellrades für die zuvor- gewünschte, für einen normalen Reinigungsvorgang ausreichende Fluidmenge verlorengeht.

Weiters kann bei der bekannten Munddusche ein Erhöhen der einem Mundstück zuführbaren Fluidmenge nur bis zu der durch die Dimensionierung des Fluidkanals und der darin aufgenommenen Fluidmengenregeleinrichtung bestimmten Maximalfluidmenge erfolgen.

Die Erfindung hat sich zur Aufgabe gestellt, die vorstehend angeführten Schwierigkeiten zu vermeiden und bei einer Zahnreinigungseinrichtung der eingangs im ersten Absatz angeführten Gattung auf einfache Weise ein einfaches und rasches Zuführen einer erhöhten Fluidmenge zu einem über das Handstück mit einem Fluid versorgbaren Mundstück zu erreichen, ohne daß hierbei die Einstellposition der Einstelleinrichtung für die Fluidmengenregeleinrichtung verändert werden muß.

Zur Losung dieser Aufgabe ist eine Zahnreinigungseinrichtung der eingangs im ersten Absatz angeführten Gattung erfindungsgemäß dadurch gekennzeichnet, daß das Handstück mit aktivierbaren Mitteln zum zeitweiligen Erhöhen der dem Mundstück zugeführten Fluidmenge unter Beibehaltung der jeweiligen Einstellposition der Einstelleinrichtung für die Fluidmengenregeleinrichtung versehen ist.

Hierdurch ist auf einfache Weise erreicht, daß durch das Aktivieren der hierfür an dem Handstück der Zahnreinigungseinrichtung vorgesehenen Mittel,das mit diesem Handstück verbundene Mundstück sehr rasch und einfach mit einer erhöhten Fluidmenge versorgt werden kann, ohne daß hierbei die Einstellposition der Einstelleinrichtung für die Fluidmengenregeleinrichtung verändert werden muß, so daß diese Einstellposition während des zur Erzielung einer stärkeren Reinigungswirkung vorgenommenen Erhöhens der Fluidmenge erhalten bleibt und folglich nach dem Beenden des Erhöhens der Fluidmenge sofort wieder die vor dem Erhöhen der Fluidmenge eingestellte, für eine normale Reinigungswirkung ausreichende Fluidmenge zur Verfügung steht.
Bei einer erfindungsgemäßen Zahnreinigungseinrichtung hat sich als sehr vorteilhaft erwiesen, wenn die aktivierbaren Mittel einen Zusatzfluidkanal und eine zwischen einem Sperrzustand und einem Freigabezustand umschaltbare Absperreinrichtung zum Absperren und Freigeben des Zusatzfluidkanals aufweisen. Hierdurch ist es auf besonders einfache Weise möglich, dem Mundstück einer erfindungsgemäßen Zahnreinigungseinrichtung eine von der Dimensionierung des Fluidkanals der Fluidmengenregeleinrichtung unabhängige erhöhte Fluidmenge zuzuführen.

Als sehr vorteilhaft hat sich weiters erwiesen, wenn an dem Handstück eine mit der Hand betätigbare, aus einer Ruheposition in eine Betriebsposition verstellbare Verstelleinrichtung zum Verstellen der Absperreinrichtung vorgesehen ist und die Absperreinrichtung bei in ihre Betriebsposition verstellter Verstelleinrichtung ihren Freigabezustand einnimmt und den Zusatzfluidkanal freigibt.

Hierdurch ist eine sehr einfache Ausbildung erhalten, wobei zum Erhalten einer erhöhten Fluidmenge lediglich die Verstelleinrichtung, die an dem im Betrieb in einer Hand gehaltenen Handstück vorgesehen ist, mit dieser Hand betätigt und hierbei aus ihrer Ruheposition in ihre Betriebsposition verstellt werden muß. Dies kann vorteilhafterweise erfolgen, ohne daß die Griffhaltung dieser Hand verändert werden muß.

Bei einer vorteilhaften Ausbildung einer erfindungsgemäßen Zahnreinigungseinrichtung ist vorgesehen, daß die Absperreinrichtung durch ein Kegelventil mit einem in Achsrichtung verstellbaren Ventilkörper gebildet ist, dessen Ventilkörper mit einer Druckfeder belastet ist, die den Ventilkörper in Richtung von einer Freigabeposition entsprechend dem Freigabezustand der Absperreinrichtung zu einer Sperrposition entsprechend dem Absperrzustand der Absperreinrichtung belastet. Auf diese Weise ist eine selbstsperrende Absperreinrichtung vorgesehen, mit der bei einem Verstellen der Verstelleinrichtung in ihre Ruheposition der Zusatzfluidkanal mit Sicherheit gesperrt wird.

Eine weitere vorteilhafte Ausbildung einer erfindungsgemäßen Zahnreinigungseinrichtung ist dadurch gekennzeichnet, daß die Verstelleinrichtung an einem in Längsrichtung des Handstückes verstellbar geführten Schieber angebracht ist, der zwischen einer Ausschaltposition und einer Einschaltposition verschiebbar ist, und daß bei in seiner Ausschaltposition befindlichem Schieber ein Umschalten der Absperreinrichtung mit der Verstelleinrichtung unterbunden ist und bei in seiner Einschaltposition befindlichem Schieber ein Umschalten der Absperreinrichtung aus ihrem Sperrzustand in ihrem Freigabezustand mit der Verstelleinrichtung durchführbar ist.

Auf diese Weise ist erreicht, daß die an dem Schieber angebrachte Verstelleinrichtung in eine Position am Handstück verstellt werden kann, in der ein Umschalten der Absperreinrichtung nicht möglich ist, so daß ein Erhöhen der zu dem mit dem Handstück verbundenen Mundstück fließenden Fluidmenge bewußt unterbunden werden kann.

Bei einer solchen Ausbildung einer erfindungsgemäßen Zahnreinigungseinrichtung hat sich als vorteilhaft erwiesen, wenn die Verstelleinrichtung einen Druckknopf aufweist, an dem eine Druckfeder angreift, die an dem Schieber abgestützt ist und die den Druckknopf in Richtung von der Betriebsposition zu der Ruheposition der Verstelleinrichtung belastet. Auf diese Weise ist eine besonders einfache und betriebssichere Ausbildung erreicht.

Bei einer erfindungsgemäßen Zahnreinigungseinrichtung mit einem in Längsrichtung des Handstückes der Zahnreinigungseinrichtung verstellbar geführten Schieber hat sich weiters als besonders vorteilhaft erwiesen, wenn der Schieber einen Verstellabschnitt aufweist und in dem Fluidkanal eine zwischen einem Sperrzustand und einem Freigabezustand verstellbare weitere Absperreinrichtung zum Absperren und Freigeben des Fluidkanals vorgesehen ist, die mit dem Verstellabschnitt des Schiebers umschaltbar ist, und bei in seiner Ausschaltposition befindlichem Schieber die weitere Absperreinrichtung ihren Sperrzustand und bei in seiner Einschaltposition befindlichem Schieber die weitere Absperreinrichtung ihren Freigabezustand einnimmt.

Auf diese Weise ist erreicht, daß bei in seiner Ausschaltposition befindlichem Schieber sowohl der Fluidkanal als auch der Zusatzfluidkanal gesperrt sind und daß nur bei freigegebenem Fluidkanal auch der Zusatzfluidkanal zum Zuführen einer erhöhten Fluidmenge zu einem mit dem Handstück verbundenen Mundstück freigebbar ist. Bei einer solchen Ausbildung einer erfindungsgemäßen Zahnreinigungseinrichtung hat sich als besonders vorteilhaft erwiesen, wenn die weitere Absperreinrichtung durch ein weiteres Kegelventil mit einem in Achsrichtung verstellbaren Ventilkörper gebildet ist, dessen Ventilkörper mit einer weiteren Druckfeder belastet ist, die den Ventilkörper in Richtung von einer Freigabeposition entsprechend dem Freigabezustand der weiteren Absperreinrichtung zu einer Sperrposition entsprechend dem Sperrzustand der weiteren Absperreinrichtung belastet.

Auf diese Weise ist eine selbstsperrende weitere Absperreinrichtung vorgesehen, mit der bei einem Verstellen des Schiebers in seine Ausschaltposition der Fluidkanal mit Sicherheit gesperrt wird.

Als besonders vorteilhaft hat sich weiters erwiesen, wenn der Druckknopf in einem in Längsrichtung des Handstückes verstellbar geführten Schiebeknopf aufgenommen ist und mit seinem vom Handstück wegweisenden Bereich den Schiebeknopf durchsetzt. Auf diese Weise ist erreicht, daß sowohl der Druckknopf als auch der Schiebeknopf je mit dem Daumen einer das Handstück in der Hand haltenden Hand betätigt werden kann.

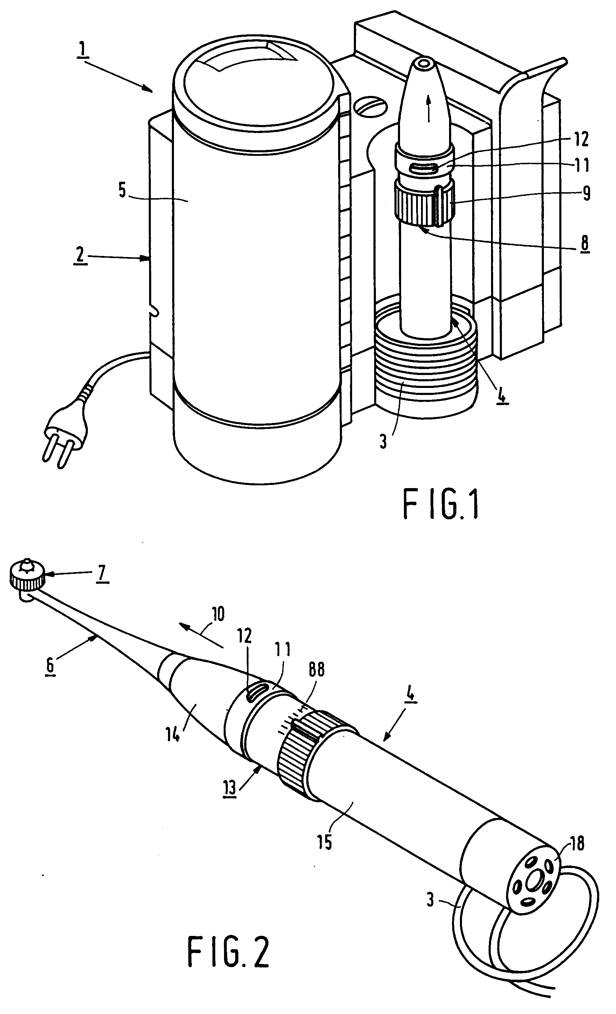

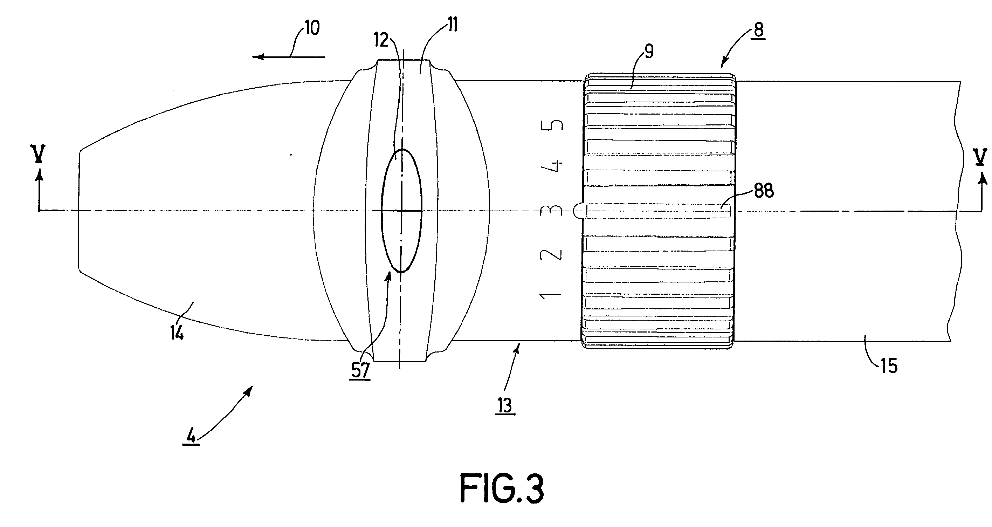

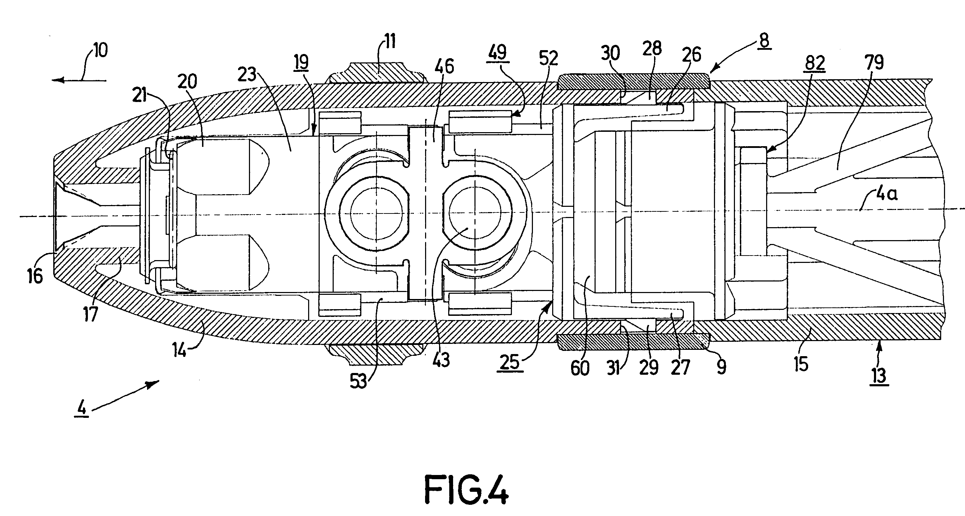

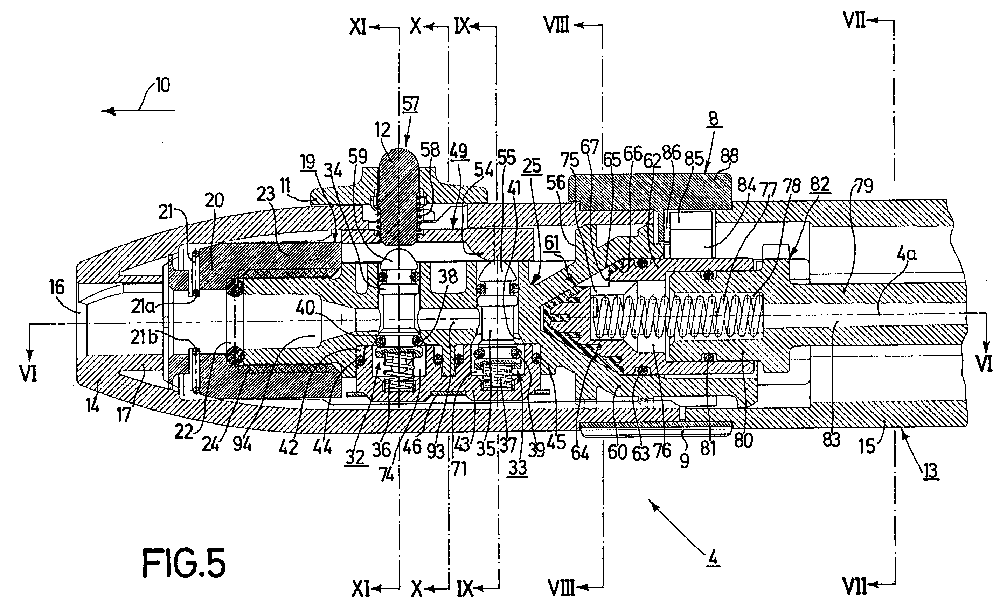

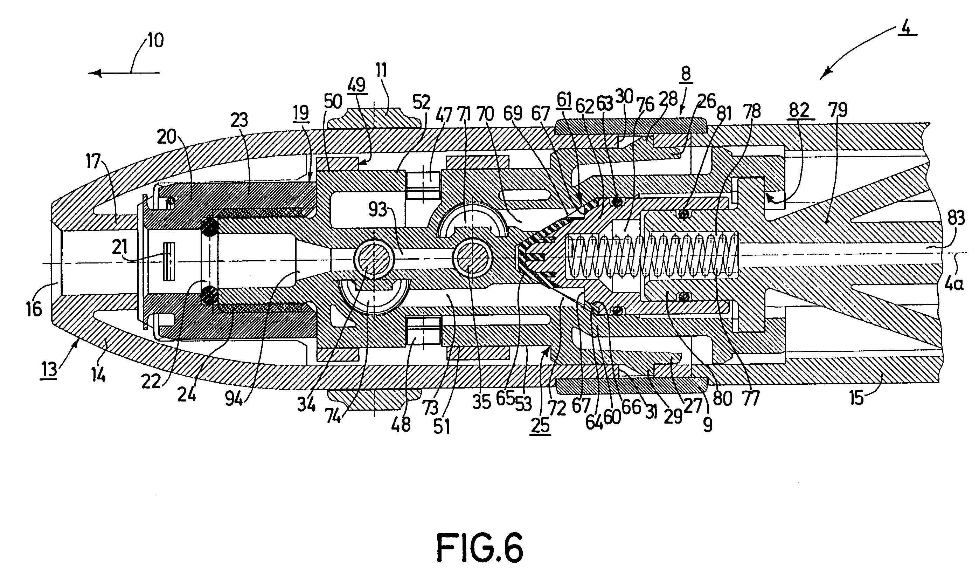

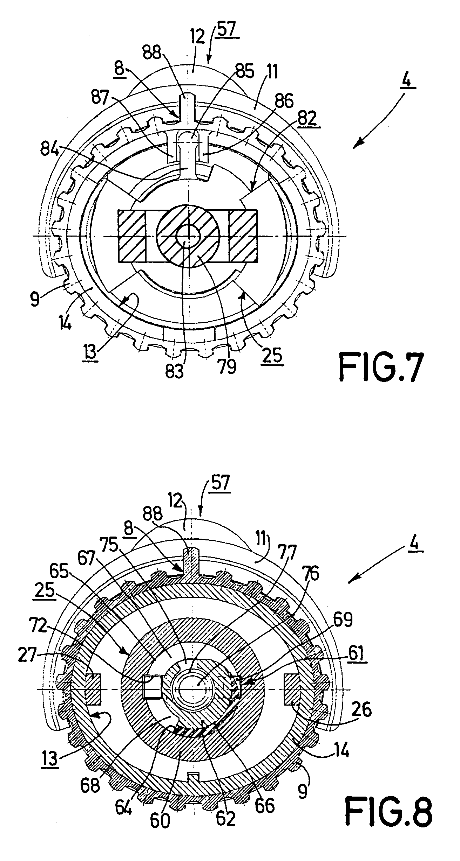

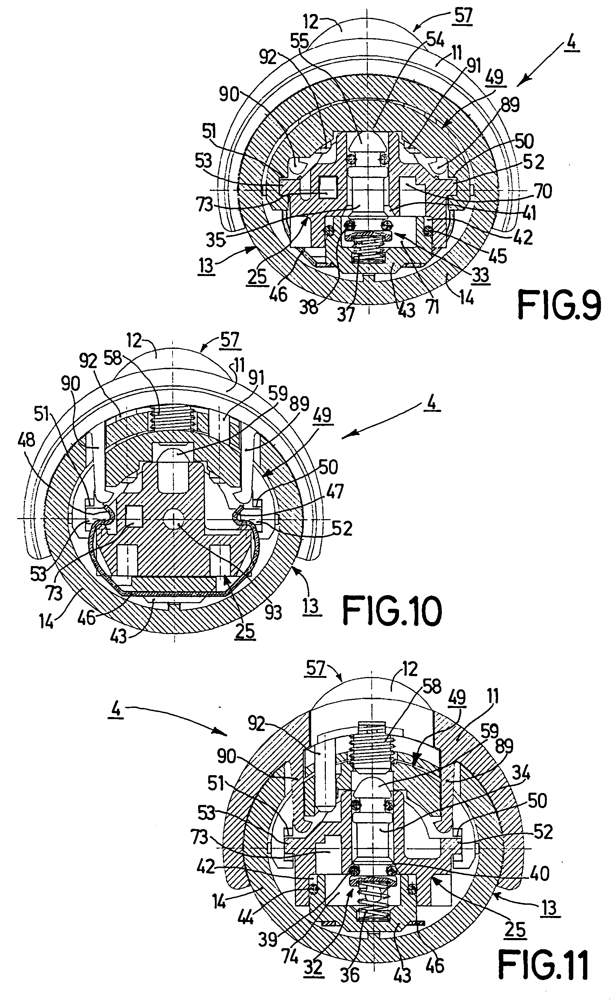

Die Erfindung wird im folgenden anhand von einem in den Zeichnungen dargestellten Ausführungsbeispiel beschrieben, auf das die Erfindung aber nicht beschränkt sein soll. Die Fig. 1 zeigt schematisch in Schrägansicht eine Munddusche, die ein Grundgerät und ein mit dem Grundgerät über einen Schlauch verbundenes Handstück aufweist, mit dem verschiedene Mundstücke verbindbar sind. In Fig.2 ist schematisch in Schrägansicht das Handstück der Munddusche gemäß Fig.1 dargestellt, wobei auf dieses Handstück ein Mundstück aufgesteckt ist, das an seinem freien Ende mit einem Düsenkopf versehen ist. Die Fig.3 zeigt in einer Ansicht von oben einen im vorliegenden Zusammenhang wesentlichen Teil des Handstückes, das in den Figuren 1 und 2 schematisch dargestellt ist. Die Fig.4 zeigt den in Fig.3 dargestellten Teil des Handstückes gemäß Fig.3 in einer Ansicht von unten bei teilweise weggeschnittenem Gehäuse, wobei der Schnitt durch das Gehäuse parallel zur Zeichnungsblattebene der Fig.3 und durch die Achse des Handstückes hindurch vorgenommen ist. Die Fig.5 zeigt in einem Schnitt gemäß der Linie V-V in Fig.3 den in den Figuren 3 und 4 dargestellten Teil des Handstückes. Die Fig.6 zeigt in einem Schnitt längs der Linie VI-VI in Fig.5 den in den Figuren 3, 4 und 5 dargestellten Teil des Handstückes. Die Fig. 7 zeigt in einem Schnitt längs der Linie VII-VII in Fig. 5 ein Detail des in den Figuren 3, 4, 5 und 6 dargestellten Teiles des Handstückes. Die Fig.8 zeigt in einem Schnitt längs der Linie VIII-VIII in Fig.5 ein Detail des in den Figuren 3, 4, und 6 dargestellten Teiles des Handstückes. Die Fig.9 zeigt in einem Schnitt längs der Linie IX-IX in Fig.5 ein Detail des in den Figuren 3, 4, 5 und 6 dargestellten Teiles des Handstückes. Die Fig. 10 zeigt in einem Schnitt gemäß der Linie X-X in Fig.5 ein Detail des in den Figuren 3, 4, 5 und 6 dargestellten Teiles des Handstückes. Die Fig. 11 zeigt in einem Schnitt längs der Linie XI-XI in Fig.5 ein Detail des in den Figuren 3, 4, 5 und 6 dargestellten Teiles des Handstückes.

In der Fig. 1 ist ein Zahnreinigungsgerät in Form einer Munddusche 1 dargestellt, die ein Grundgerät 2 und ein mit dem Grundgerät 2 über einen flexiblen Schlauch 3 verbundenes Handstück 4 aufweist. Auf das Grundgerät 2 ist ein Fluidbehälter 5 aufgesetzt, und in dem Grundgerät 2 ist eine motorisch angetriebene Pumpeinrichtung vorgesehen, mit der ein Fluid, beispielsweise Wasser, aus dem Fluidbehälter 5 über den Schlauch 3 zu dem Handstück 4 gepumpt werden kann. Auf das Handstück 4 sind verschiedene Mundstücke aufsetzbar, wie dies für ein Mundstück 6 in Fig.2 dargestellt ist. Das zum Handstück 4 gepumpte Fluid wird dem Mundstück 6 zugeführt und über einen Düsenkopf 7 des Mundstückes 6 in Strahlform zum Reinigen von Zähnen und Zahnfleisch bzw. zum Massieren von Zahnfleisch abgegeben.

Zum Einstellen einer gewünschten, dem Mundstück 6 zugeführten Fluidmenge ist an dem Handstück 4 eine verstellbare Einstelleinrichtung 8 für eine Fluidmengenregeleinrichtung vorgesehen. Die Einstelleinrichtung 8 weist einen in Umfangsrichtung des Handstückes 4 flexibel ausgebildeten Einstellring 9 auf. Auf die Ausbildung der Einstelleinrichtung 8 ist nachfolgend noch im Detail näher eingegangen. Durch Verdrehen des Einstellringes 9 ist die im Handstück 4 vorgesehene Fluidmengenregeleinrichtung auf die jeweils gewünschte, dem Mundstück 6 zugeführte Fluidmenge einstellbar. Auch auf die Ausbildung der Fluidmengenregeleinrichtung ist nachfolgend noch im Detail näher eingegangen.

An dem Handstück 4 ist weiters noch ein in und entgegen der durch den Pfeil 10 angedeuteten Längsrichtung des Handstückes 4 verstellbar geführter Schiebeknopf 11 vorgesehen, der aus einer in Fig.2 dargestellten Ausschaltposition in eine in den Figuren 3 bis 8 dargestellte Einschaltposition verschiebbar ist. Bei in seiner Ausschaltposition befindlichem Schiebeknopf 11 ist die Wasserzufuhr vom Schlauch 3 zu dem Mundstück 6 über das Handstück 4 unterbunden und bei in seiner Einschaltposition befindlichem Schiebeknopf 11 ist die Wasserzufuhr vom Schlauch 3 zum Mundstück 6 über das Handstück 4 freigegeben und daher möglich.

In dem Schiebeknopf 11 ist weiters ein Druckknopf 12 aufgenommen, der mit seinem vom Handstück 4 wegweisenden Bereich den Schiebeknopf 11 durchsetzt. Die Funktion des Druckknopfes 12 ist nachfolgend noch im Detail näher erläutert.

Das Handstück 4 der Munddusche 1 weist ein längliches hülsenförmiges Gehäuse 13 aus Kunststoff auf, das aus einem ersten Gehäuseteil 14, der einem Mundstück 6 zugewandt ist, und aus einem im Bereich des flexiblen Einstellringes 9 stirnseitig gegen das Ende des ersten Gehäuseteiles 14 gehaltenen zweiten Gehäuseteil 15 besteht. Der erste Gehäuseteil 14 ist an seinem freien Ende mit einer Öffnung 16 versehen, durch die der Innenraum eines innenliegenden rohrförmigen Gehäuseabschnittes 17 zugänglich ist. Durch die Öffnung 16 ist ein Mundstück 6 in den rohrförmigen Gehäuseabschnitt 17 einführbar, um ein Mundstück 6 mit dem Handstück 4 fluidleitend zu verbinden. Der zweite Gehäuseteil 15 ist an seinem freien Ende mit einem Boden 18 versehen, wie dies aus Fig.2 ersichtlich ist.

An den rohrförmigen Abschnitt 17 des ersten Gehäuseteiles 14 schließt sich ein rohrförmiges Verbindungsstück 19 aus Kunststoff an, das in dem ersten Gehäuseteil 14 positioniert ist und das einen relativ dickwandigen Abschnitt 20 aufweist, in den das Ende eines Mundstückes 6 einführbar ist. Im Bereich des relativ dickwandigen Abschnittes 20 ist eine Drahtfeder 21 vorgesehen, die die Form eines Kreisbügels aufweißt, der sich über einen Winkelbereich von etwa 270° erstreckt und dessen Enden 21a und 21b in das Kreisbügelinnere hinein abgebogen sind und dort geradlinig und im wesentlichen parallel zueinander verlaufen. Mit den beiden Federenden 21a und 21b ist ein Mundstück 6 an dem Handstück 4 festhaltbar, indem die Federenden 21a und 21b in eine hierfür am Mundstück 6 vorgesehene Nut einrasten. Das Ende eines mit der Feder 21 festgehaltenen Mundstückes 6 liegt dabei an einem Dichtungsring 22 an, der in den relativ dickwandigen Abschnitt 20 des Verbindungsstückes 19 eingesetzt ist.

Das Verbindungsstück 19 ist mit einem relativ dünnwandigen Abschnitt 23 über eine in den Figuren 5 und 6 schematisch dargestellte Schraubverbindung 24 mit einem Ventilgehäuse 25 aus Kunststoff verbunden. Wie aus den Figuren 4 und 6 ersichtlich ist, ist das Ventilgehäuse 25 mit Hilfe von zwei von dem Ventilgehäuse 25 seitlich abstehenden federnden Rastarmen 26 und 27 in dem ersten Gehäuseteil 14 festgehalten,indem zwei an den Rastarmen 26 und 27 vorgesehene Rastnasen 28 und 29 nach dem Einschieben des Ventilgehäuses 25 samt dem mit ihm verschraubten Verbindungsstück 19 in den ersten Gehäuseteil 14 in zwei im ersten Gehäuseteil 14 vorgesehene Rastöffnungen 30 und 31 einrasten. Die Rastöffnungen 30 und 31 und die Rastnasen 28 und 29 sind hierbei von dem flexiblen Einstellring 39 überdeckt.

Wie am besten aus Fig.5 ersichtlich ist, sind in dem Ventilgehäuse 25 eine erste Absperreinrichtung 32 und weiters eine zweite Absperreinrichtung 33 vorgesehen. Die beiden Absperreinrichtungen 32 und 33 sind je zwischen einem Sperrzustand und einem Freigabezustand umschaltbar.

In Fig.5 ist die erste Absperreinrichtung 32 in ihrem Sperrzustand und die zweite Absperreinrichtung 33 in ihrem Freigabezustand befindlich dargestellt. Jede der beiden Absperreinrichtungen 32 und 33 ist durch ein Kegelventil mit einem in Achsrichtung des Kegelventils verstellbaren Ventilkörper 34 und 35 gebildet. Jeder der beiden Ventilkörper 34 und 35 ist mit einer Druckfeder 36 bzw. 37 belastet, die den betreffenden Ventilkörper 34 bzw. 35 in Richtung von einer Freigabeposition entsprechend dem Freigabezustand der betreffenden Absperreinrichtung 32 bzw. 33 zu einer Sperrposition entsprechend dem Sperrzustand der betreffenden Absperreinrichtung 32 bzw. 33 belastet. An jedem der beiden Ventilkörper 34 und 35 sind für Dichtungszwecke zwei Dichtungsringe festgehalten.

Von diesen Dichtungsringen wirken zwei Dichtungsringe 38 und 39 jeweils in der Absperrposition des betreffenden Ventilkörpers 34 bzw. 35 mit kegelförmig verlaufenden Ventilflächen 40 bzw. 41 des Ventilgehäuses 25 zusammen. Mit den beiden Absperreinrichtungen 32 und 33 ist ein besonders sicheres und selbstsperrendes Verhalten gewährleistet.

Um die Ventilkörper 34 und 35 und die Druckfedern 36 und 37 in das Ventilgehäuse 25 einführen zu können, ist das Ventilgehäuse 25 in seinem Bodenbereich mit einer Öffnung 42 versehen, die mit einem Ventilgehäusedeckel 43 unter Zwischenfügung von zwei Dichtungen 44 und 45 verschlossen ist. Zum Festhalten des Ventilgehäusedeckels 43 an dem Ventilgehäuse 25 ist eine im Querschnitt etwa omegaförmige, aus federndem Blechmaterial bestehende Klammer 46 vorgesehen, die sich mit ihren abgebogen ausgebildeten Enden 47 und 48 an dem Ventilgehäuse 25 festklammert, wie dies insbesondere aus Fig. 10 klar ersichtlich ist.

An dem Ventilgehäuse 25 ist ein Schaltschieber 49 in und entgegen der Richtung des Pfeiles 10 verschiebbar geführt. Der Schaltschieber 49 weist im Querschnitt eine im wesentlichen gewölbte Form auf, wie dies aus den Figuren 9 bis 11 ersichtlich ist. Die beiden seitlichen Endbereiche des Schaltschiebers 49 sind in der Längsrichtung des Handstückes 4 zweigeteilt, wobei die beiden Teile zwischen sich eine Freistellung für die Klammerarme der federnden Klammer 46 einschließen, wie dies aus den Figuren 4 und 6 ersichtlich ist. Zur Führung des Schaltschiebers 49 an dem Ventilgehäuse 25 weist der Schaltschieber 49 in seinen beiden seitlichen Endbereichen je eine unterbrochene Führungsnut 50 bzw. 51 auf, in die je eine von dem Ventilgehäuse 25 seitlich abstehende unterbrochene Führungsleiste 52 bzw. 53 hineinragt, wie dies aus den Figuren 4, 6 und 9 bis 11 ersichtlich ist. Der Schaltschieber 49 ist zwischen einer in den Figuren 3 bis 11 dargestellten Einschaltposition und einer in den Figuren nicht dargestellten Ausschaltposition verschiebbar.

Wie aus den Figuren 5 und 9 ersichtlich ist, weist der Schaltschieber 49 einen Verstellabschnitt 54 auf. Mit diesem Verstellabschnitt 54 des Schaltschiebers 49 ist die zweite Absperreinrichtung 33 umschaltbar, und zwar dadurch, daß der Verstellabschnitt 54 mit einem Kopfteil 55 des Ventilkörpers 35 der als Kegelventil ausgebildeten zweiten Absperreinrichtung 33 zusammenwirkt. In den Figuren 5 und 9 ist der Schaltschieber 49 in seiner Einschaltposition befindlich dargestellt, wobei dann die zweite Absperreinrichtung 33 sich in ihrem Freigabezustand befindet, wobei ihr Ventilkörper 35 seine Freigabeposition einnimmt. Aus der in den Figuren 5 und 9 dargestellten Einschaltposition des Schaltschiebers 49 ist der Schaltschieber 49 entgegen der Richtung des Pfeiles 10 in eine Ausschaltposition verschiebbar, in der sich der Schaltschieber 49 mit seinem Verstellabschnitt 54 an einem vom Ventilgehäuse 25 abstehenden Anschlag 56 abstützt. Bei in seiner Ausschaltposition befindlichem Schaltschieber 49 befindet sich die zweite Absperreinrichtung 33 in ihrem Sperrzustand, weil dann die Druckfeder 37 der zweiten Absperreinrichtung 33 den Ventilkörper 35 in seine Sperrposition verstellt hält, wobei sich der Dichtungsring 39 an der kegelförmigen Ventilfläche 41 des Ventilgehäuses 25 abstützt.

Zum Umschalten der ersten Absperreinrichtung 32 zwischen deren Sperrzustand und deren Freigabezustand ist an dem Handstück 4 eine mit der Hand betätigbare Verstelleinrichtung 57 vorgesehen. Die Verstelleinrichtung 57 ist hierbei vorteilhafterweise an dem Schaltschieber 49 angebracht. Die Verstelleinrichtung 57 besteht aus dem Druckknopf 12 sowie aus einer an dem Druckknopf 12 angreifenden Druckfeder 58, die an dem Schaltschieber 49 abgestützt ist. Die Verstelleinrichtung 57 ist zwischen einer in den Figuren 1, 2, 3, 5, 7, 8, 9, 10 und 11 dargestellten Ruheposition und einer in den Figuren nicht dargestellten Betriebsposition verstellbar, in welch letztere sie durch Niederdrücken des Druckknopfes 12 bringbar ist. Solange die Verstelleinrichtung 57 ihre Ruheposition einnimmt, befindet sich die erste Absperreinrichtung 32 in ihrem Sperrzustand, wie aus Fig.5 leicht ersichtlich ist. Sobald die Verstelleinrichtung 57 in ihre Betriebsposition durch Niederdrücken des Druckknopfes 12 gebracht ist, befindet sich die erste Absperreinrichtung 32 in ihrem Freigabezustand.

Die Verstelleinrichtung 57 ist vorteilhafterweise an dem in Längsrichtung des Handstückes 4 verstellbar geführten Schaltschieber 49 angebracht, der zwischen seiner in Fig. 5 dargestellten Einschaltposition und seiner in Fig.5 nicht dargestellten Ausschaltposition verschiebbar ist. Wie aus Fig.5 ersichtlich ist, ist hierdurch auf einfache Weise erreicht, daß bei in seiner Einschaltposition befindlichem Schaltschieber 49 ein Umschalten der ersten Absperreinrichtung 32 aus ihrem Sperrzustand in ihren Freigabezustand mit der Verstelleinrichtung 57 durchführbar ist und daß bei in seiner Ausschaltposition befindlichem Schaltschieber 49 ein Umschalten der ersten Absperreinrichtung 32 mit der Verstelleinrichtung 57 unterbunden ist. Bei in seiner Einschaltposition befindlichem Schaltschieber 49 erfolgt ein Umschalten der ersten Absperreinrichtung 32 mit Hilfe der Verstelleinrichtung 57 in der Weise, daß die Drucktaste 12 mit der Hand entgegen der Kraft der Druckfeder 58 gegen einen Kopfteil 59 des Ventilkörpers 34 der ersten Absperreinrichtung 32 gedrückt wird, wobei dann der Ventilkörper 34 entgegen der Kraft der Druckfeder 36 bis in seine Freigabeposition verstellt wird, wobei der Dichtungsring 38 von der kegelförmigen Ventilfläche 40 des Ventilgehäuses 25 abgehoben wird.

An den Bereich des Ventilgehäuses 25 mit den beiden Absperreinrichtungen 32 und 33 angrenzend weist das Ventilgehäuse 25 einen im wesentlichen trichterförmigen Abschnitt 60 auf, der einen Teil einer Fluidmengenregeleinrichtung 61 bildet. Die Fluidmengenregeleinrichtung 61 weist neben dem trichterförmigen Abschnitt 60 des Ventilgehäuses 25 noch einen im wesentlichen kegelförmigen Ventilkörper 62 aus Kunststoff auf, der in den trichterförmigen Abschnitt 60 unter Zwischenfügung eines Dichtungsringes 63 eingesetzt ist und der bei dem vorliegenden Handstück 4 um die Längsachse 4a des Handstückes 4 gegenüber dem trichterförmigen Abschnitt 60 des Ventilgehäuses 25 verdrehbar ist.

Im Bereich seiner im wesentlichen kegelförmigen Ausbildung ist der Ventilkörper 62 mit einer Dichtungskappe 64 versehen, die aus Gummi besteht und die an der inneren kegelförmigen Begrenzungsfläche 65 des trichterförmigen Abschnittes 60 des Ventilgehäuses 25 anliegt. Im Bereich seiner äußeren kegelförmigen Begrenzungsfläche 66 ist der Ventilkörper 62 mit einer in Umfangsrichtung verlaufenden, von der Dichtungskappe 64 freigelassenen Ausnehmung 67 versehen, die - wie aus den Figuren 5 und 6 ersichtlich ist - in einem Längsschnitt durch das Handstück 4 eine dreieckige Querschnittsform aufweist und die - wie aus Fig.8 ersichtlich ist - in einem Querschnitt durch das Handstück 4 eine im wesentlichen sichelartige Querschnittsform aufweist. Wie die Fig.8 zeigt, weist die Ausnehmung 67 von ihrem einen Ende 68 weg über einen Winkelbereich von etwa 150° eine gleichbleibende Breite auf, jedoch nimmt diese Breite zum anderen Ende der Ausnehmung 67 hin stetig ab.

Es sei ausdrücklich festgehalten, daß dieses andere Ende der Ausnehmung 67 in Fig.8 nicht sichtbar ist, weil dieses andere Ende aufgrund der Lage des Schnittes gemäß der Linie VIII-VIII in Fig.5 in Fig.8 hinter dem betreffenden Teil der Dichtungskappe 64 liegt. Der Ausnehmung 67 im Ventilkörper 62 liegt in ihrem sich verschmälernden Bereich eine erste Einlaßöffnung 69 im trichterförmigen Abschnitt 60 des Ventilgehäuses 25 gegenüber, die - wie aus Fig.6 ersichtlich ist über einen im Ventilgehäuse 25 vorgesehenen ersten Zwischenkanal 70 mit einem vom Ventilgehäusedeckel 43 verschlossenen, die Druckfeder 37 aufnehmenden Raum 71 verbunden ist, wie dies aus den Figuren 5, 6 und 9 ersichtlich ist. Weiters liegt der Ausnehmung 67 im Ventilkörper 62 in ihrem Bereich mit gleichbleibender Breite eine zweite Einlaßöffnung 72 im trichterförmigen Abschnitt 60 des Ventilgehäuses 25 gegenüber. Die zweite Einlaßöffnung 72 ist über einen zweiten Zwischenkanal 73 mit einer weiteren vom Ventilgehäusedeckel 43 verschlossenen, die Druckfeder 36 aufnehmenden Raum 74 verbunden, wie dies aus den Figuren 5, 6, 9, 10 und 11 ersichtlich ist. Durch Verdrehen des Ventilkörpers 62 gegenüber dem trichterförmigen Abschnitt 60 des Ventilgehäuses 25 wird die Ausnehmung 67 im Ventilkörper 62 mit ihrem sich verschmälernden Bereich gegenüber der ersten Einlaßöffnung 69 im trichterförmigen Abschnitt 60 verdreht, wodurch sich unterschiedliche Durchflußquerschnitte einstellen lassen. Auf diese Weise kann durch Verdrehen des Ventilkörpers 62 und der dadurch bewirkten Änderung des Durchflußquerschnittes zwischen der Ausnehmung 67 und der ersten Einlaßöffnung 69 eine Fluidmengenregelung durchgeführt werden. Aufgrund der Ausbildung der Ausnehmung 67 im Ventilkörper 62 in ihrem der zweiten Einlaßöffnung 72 gegenüberliegenden Bereich, in dem ihre Breite unverändert bleibt, ist erreicht, daß unabhängig von der Drehposition des Ventilkörpers 62 zwischen der Ausnehmung 67 und der zweiten Einlaßöffnung 72 stets der gleiche, und zwar stets maximal große Durchflußquerschnitt erhalten bleibt.

Die Ausnehmung 67 im Ventilkörper 62 ist über einen Durchgang 75 im Ventilkörper 62 mit einem Innenraum 76 im Ventilkörper 62 verbunden, wie dies aus den Figuren 5 und 8 ersichtlich ist. In den Innenraum 76 ist eine Druckfeder 77 aufgenommen, die sich einerseits am Ventilkörper 62 abstützt und auf diese Weise den Ventilkörper 62 mit seiner Dichtungskappe 64 in den trichterförmigen Abschnitt 60 des Ventilgehäuses 25 drückt und die sich andererseits in einem Innenraum 78 eines Fluidzufuhrstückes 79 aus Kunststoff an dem Fluidzufuhrstück 79 abstützt, das mit einem hohlzylindrischen Abschnitt 80 in den Innenraum 76 des Ventilkörpers 62 unter Zwischenfügung eines Dichtungsringes 81 eingeführt ist und das mit Hilfe einer bajonettartigen Sicherungseinrichtung 82 an dem Ventilgehäuse 25 entgegen der Kraftwirkung der Druckfeder 77 festgehalten ist. In dem Fluidzufuhrstück 79 ist ein Fluidzufuhrkanal 83 vorgesehen, der auf nicht näher dargestellte Weise mit dem Schlauch 3 der Munddusche 1 verbunden ist. In das in den Figuren 3 bis 6 nicht dargestellte Ende des Fluidzufuhrstückes 79 ist eine den Boden 18 des zweiten Gehäuseteiles 15 durchsetzende Schraube eingeschraubt, mit der der Boden 18 und damit der zweite Gehäuseteil 15 an dem Fluidzufuhrstück 79 festgehalten ist, das seinerseits mit der Sicherungseinrichtung 82 mit dem im ersten Gehäuseteil 14 festgehaltenen Ventilgehäuse 25 verbunden ist.

Zum Verdrehen des Ventilkörpers 62 gegenüber dem trichterförmigen Abschnitt 60 des Ventilgehäuses 25 steht von dem Ventilkörper 62 ein Arm 84 nach außen hin ab, der ein im Querschnitt kreisförmiges Ende 85 aufweist. Das Ende 85 ist zwischen zwei von dem flexiblen Einstellring 9 der Einstelleinrichtung 8 nach innen zu abstehende Leisten 86 und 87 der Einstelleinrichtung 8 aufgenommen, wodurch eine Koppelung zwischen dem flexiblen Einstellring 9 und dem Ventilkörper 62 erreicht ist, wie dies aus Fig. 5 und insbesondere aus Fig. 7 klar ersichtlich ist. In der Fig.7 ist wegen der Deutlichkeit der Darstellung der zweite Gehäuseteil 15 nicht dargestellt ist. Die Einstelleinrichtung 8 ist aus der in den Figuren 3 bis 8 dargestellten Einstellposition, in der eine am Einstellring 9 der Einstelleinrichtung 8 vorgesehene Anzeigerippe 88 der Einstelleinrichtung 8 einer am ersten Gehäuseteil 14 vorgesehenen Skalenzahl "3" gegenüberliegt, in zueinander entgegengesetzten Richtungen in verschiedene Einstellpositionen verstellbar, wobei der Ventilkörper 62 mit Hilfe der Einstelleinrichtung 8 aus der in den Figuren 3 bis 8 dargestellten Einstellposition in zueinander entgegengesetzten Richtungen um etwa +45° verstellt werden kann. Das Verstellen des Einstellringes 9 der Einstelleinrichtung 8 kann auf einfache Weise mit dem Daumen einer das Handstück 4 haltenden Hand vorgenommen werden.

Im Zusammenhang mit dem Betätigen der Bedienungsmittel am Handstück 4 hat es sich als sehr vorteilhaft erwiesen, daß der Druckknopf 12 der Verstelleinrichtung 57 in dem in Längsrichtung des Handstückes 4 verstellbar geführten Schiebeknopf 11 aufgenommen ist und mit seinem vom Handstück 4 abgewandten Bereich den Schiebeknopf 11 durchsetzt. Hierdurch ist nämlich auf einfache Weise erreicht, daß nicht nur der flexible Einstellring 9 der Einstelleinrichtung 8, sondern zusätzlich auch der Schiebeknopf 11 und weiters auch noch der Druckknopf 12 der Verstelleinrichtung 57 mit dem Daumen einer das Handstück 4 haltenden Hand auf einfache Weise betätigt werden können.
Wie aus den Figuren 9, 10 und 11 erkennbar ist, kann der aus Kunststoff bestehende Schiebeknopf 11, nachdem das Ventilgehäuse 25 samt dem mit den Ventilgehäuse 25 verschraubten Verbindungsstück 19 und dem am Ventilgehäuse 25 verschiebbar geführten Schaltschieber 49 in den ersten Gehäuseteil 14 eingeschoben worden sind, auf den ersten Gehäuseteil 14 aufgesetzt werden, wobei zwei von dem Schaltschieber 49 abstehende Rastarme 89 und 90 und zwei Kopplungsstifte 91 und 92 durch je einen schlitzförmigen Durchgang im ersten Gehäuseteil 14 hindurchgeführt werden. Die Rastarme 89 und 90 dienen zum Festhalten des Schiebeknopfes 11 am Schaltschieber 49 und die Kopplungsstifte 91 und 92, die in der Längsrichtung des Handstückes 4 zueinander versetzt sind, dienen zum Koppeln des Schiebeknopfes 11 mit dem Schaltschieber 49, um die mit der Hand auf den Schiebeknopf 11 ausgeübte Kraft auf den Schaltschieber 49 zu übertragen. Der Schiebeknopf 11 weist analog wie der Schaltschieber 49 im Querschnitt eine im wesentlichen gewölbte Form auf, wobei er mit seinen beiden seitlichen Endbereichen den ersten Gehäuseteil 14 etwas umgreift, wodurch das Festhalten des Schiebeknopfes 11 am Handstück 4 unterstützt wird.

Bei der anhand der Figuren 1 bis 11 beschriebenen Munddusche 1 ist üblicherweise davon auszugehen, daß die Einstelleinrichtung 8 von einem Benützer der Munddusche 1 in eine solche Einstellposition gebracht und darin normalerweise belassen wird, bei der mit der Fluidmengenregeleinrichtung 61, die mit der Einstelleinrichtung 8 einstellbar ist, eine für den Benützer der Munddusche 1 angenehme und ausreichende Fluidmenge eingestellt ist, die im normalen Betrieb einem mit dem Handstück 4 verbundenen Mundstück 6 zugeführt wird. Weiters ist bei dieser Munddusche 1 davon auszugehen, daß nach einem Betrieb der Munddusche 1 der Schiebeschalter 11 und damit der mit ihm über die beiden Kopplungsstifte 91 und 92 gekoppelte Schaltschieber 49 je in ihre Ausschaltposition verstellt sind.

Wenn von dem vorstehend erläuterten Ausgangszustand ausgehend nunmehr ein Benützer der Munddusche 1 diese Munddusche 1 neuerlich in Betrieb nimmt, wird er durch Einschalten der Munddusche 1 die im Grundgerät 2 enthaltende Pumpeinrichtung in Funktion setzen, wodurch dann Fluid aus dem Behälter 5 über die Pumpeinrichtung dem Schlauch 3 zugeführt und von diesem zu dem Fluidzufuhrstück 79 im Handstück 4 weitergeleitet wird. Über den Fluidzufuhrkanal 83 im Fluidzufuhrstück 79 gelangt dann das Fluid in den Innenraum 76 im Ventilkörper 62 und von dort über den Durchgang 75 im Ventilkörper 62 zu der Ausnehmung 67 im Ventilkörper 62. Von der Ausnehmung 67 wird das Fluid einerseits über die erste Einlaßöffnung 69 im trichterförmigen Abschnitt 60 des Ventilgehäuses 25 und den ersten Zwischenkanal 70 im Ventilgehäuse 25 zu dem Raum 71 im Ventilgehäuse 25 weitergeleitet, in dem sich die Druckfeder 37 befindet und der durch die zweite sich in ihrem Sperrzustand befindende Absperreinrichtung 33 verschlossen ist, weil sich die Schiebetaste 11 und der Schaltschieber 49 in ihrer Ausschaltlage befinden, und andererseits wird das Fluid von der Ausnehmung 67 auch noch der zweiten Einlaßöffnung 72 im trichterförmigen Abschnitt 60 des Ventilgehäuses 25 zugeführt und von dort über den zweiten Zwischenkanal 73 im Ventilgehäuse 25 dem Raum 74 im Ventilgehäuse 25 zugeführt, in dem die Druckfeder 36 aufgenommen ist und der mittels der ersten Absperreinrichtung 32 verschlossen ist, da auch die erste Absperreinrichtung 32 sich in ihrem Sperrzustand befindet.

Um nun einen normalen Reinigungsvorgang seiner Zähne durchzuführen, wird der Benützer der Munddusche 1 die Schiebetaste 11 in Richtung des Pfeiles 10 aus ihrer in den Figuren 1 und 2 dargestellten Ausschaltposition in ihre in den Figuren 3 bis 11 dargestellte Einschaltposition verschieben Hierdurch wird mittels des Verstellabschnittes 54 des Schaltschiebers 49 die zweite Absperreinrichtung 33 in ihren Freigabezustand umgeschaltet, wodurch dann der Dichtungsring 39 von der zum Zusammenwirken mit dem Dichtungsring 39 vorgesehenen kegelförmigen Ventilfläche 41 des Ventilgehäuses 25 abhebt, so daß dann der Raum 71 im Ventilgehäuse 25 mit einem zentralen Kanal 93 im Ventilgehäuse 25 in fluidleitender Verbindung steht. Der zentrale Kanal 93 steht ständig unter Umgehung des Ventilkörpers 34 der ersten Absperreinrichtung 32 mit einem Ausgangskanal 94 im Ventilgehäuse 25 in fluidleitender Verbindung. Von dem Ausgangskanal 94 des Ventilgehäuses 25 wird das von der Pumpeinrichtung in der Munddusche 1 gelieferte Fluid einem mit dem Handstück 4 verbundenen Mundstück 6 zugeführt, das hierbei mittels der Drahtfeder 21 am Handstück 4 festgehalten ist, wobei der Übergangsbereich vom Ausgangskanal 94 des Ventilgehäuses 25 zum Mundstück 6 mit Hilfe des Dichtungsringes 22 abgedichtet ist.

In dem vorstehend beschriebenen Betriebsfall ist ein in dem Handstück 4 vorgesehener Normalfluidkanal freigegeben, der zum Zuführen von Fluid zu einem Mundstück 6 für den Fall eines normalen Reinigungsvorganges vorgesehen ist. Dieser Normalfluidkanal setzt sich aus den nachfolgend angeführten Abschnitten zusammen, nämlich aus dem Fluidzufuhrkanal 83 im Fluidzufuhrstück 79, dem Innenraum 76 im Ventilkörper 62, dem Durchgang 75 im Ventilkörper 62, der Ausnehmung 67 im Ventilkörper 62, der ersten Einlaßöffnung 69 im trichterförmigen Abschnitt 60 des Ventilgehäuses 25, dem ersten Zwischenkanal 70 im Ventilgehäuse 25, dem Raum 71 im Ventilgehäuse 25, dem zentralen Kanal 93 und schließlich dem Ausgangskanal 94 im Ventilgehäuse 25.

Bei der Munddusche 1 gemäß den Figuren 1 bis 11 hat nunmehr der Benützer der Munddusche 1 für den Fall, daß die von ihm mit der Einstelleinrichtung 8 gewählte, dem Mundstück 6 über den Normalfluidkanal 83, 76, 75, 67, 69, 70, 71, 93, 94 zugeführte Fluidmenge seinem Gefühl nach nicht ausreichend ist, vorteilhafterweise die Möglichkeit, auf einfache Weise die dem Mundstück 6 zugeführte Fluidmenge unter Beibehaltung der jeweiligen Einstellposition der Einstelleinrichtung 8 für die Fluidmengenregeleinrichtung 61 zeitweilig zu erhöhen. Hierfür braucht der Benützer bei der Munddusche 1 lediglich den Druckknopf 12 bei in ihrer Einschalposition befindlicher Schiebetaste 11 betätigen.

Hierdurch wird die erste Absperreinrichtung 32 in ihren Freigabezustand umgeschaltet, wodurch dann der Dichtungsring 38 von der zum Zusammenwirken mit dem Dichtungsring 38 vorgesehenen Ventilfläche 40 des Ventilgehäuses 25 abgehoben wird, so daß dann der zuvor von dem Dichtungsring 38 abgeschlossene Raum 74 mit dem Ausgangskanal 94 fluidleitend verbunden ist. Hierdurch ist plötzlich ein im Handstück 4 vorgesehener Zusatzfluidkanal freigegeben, über den einem Mundstück 6 eine zu der über den von der zweiten Absperreinrichtung 33 freigegebenen Normalfluidkanal dem Mundstück 6 zugeführten Fluidmenge zusätzliche Fluidmenge zuführbar ist, um eine insgesamt erhöhte Fluidmenge im Mundstück 6 zu erhalten. Der Zusatzfluidkanal setzt sich aus den nachfolgend angeführten Abschnitten zusammen, nämlich aus dem Fluidzufuhrkanal 83 im Fluidzufuhrstück 79, dem Innenraum 76 im Ventilkörper 62, dem Durchgang 75 im Ventilkörper 62, der Ausnehmung 67 im Ventilkörper 62, der zweiten Einlaßöffnung 72 im trichterförmigen Abschnitt 60 des Ventilgehäuses 25, dem zweiten Zwischenkanal 73 im Ventilgehäuse 25, dem Raum 74 im Ventilgehäuse 25 und schließlich dem Ausgangskanal 94 im Ventilgehäuse 25.

Sobald der Benützer der Munddusche 1 die Drucktaste 12 wieder losläßt, wird dieselbe mittels der Druckfeder 58 in ihre Ruheposition zurückverstellt, wodurch von der Druckfeder 36 auch der Ventilkörper 34 wieder zurückverstellt wird, so daß dann die erste Absperreinrichtung 32 sich wieder in ihrem Sperrzustand befindet, in der dann der Zusatzfluidkanal 83, 76 , 75 , 67, 72 , 73 , 74 , 94 abgesperrt ist. Somit wird das Zuführen der zusätzlichen Fluidmenge zu einem Mundstück 6 nach Loslassen der Drucktaste 12 sofort unterbrochen, wonach einem Mundstück 6 sofort wieder die zuvor mit der Einstelleinrichtung 8 eingestellte Fluidmenge über den Normalfluidkanal 83, 76, 75, 67, 69, 70, 71, ∼3, ∼4 zugeführt wird, da die Einstellposition der Einstelleinrichtung 8 während des Zuführens einer erhöhten Fluidmenge zu einem Mundstück 6 unverändert beibehalten wurde. Wieviel zusätzliche Fluidmenge einem Mundstück 6 zugeführt wird ist hierbei nur von der Dimensionierung des Zusatzfluidkanals 83, 76, 75, 67, 72, 73, 74, 94 abhängig, wobei die Dimensionierung des Normalfluidkanals 83, 76, 75 , 67 , 69 , 70, 71, 93, 94 auf die zusätzliche Fluidmenge keinen Einfluß hat.

Es kann auch in dem Zusatzfluidkanal eine Fluidmengenregeleinrichtung vorgesehen sein, um eine Einstellung der zusätzlichen Fluidmenge vornehmen zu können.

Bei einer anderen Ausführungsvariante der Erfindung kann vorgesehen sein, einen ähnlich wie bei der Munddusche gemäß der Figuren 1 bis 11 ausgebildeten verdrehbaren kegelförmigen Ventilkörper einer im Handstück vorgesehenen Fluidmengenregeleinrichtung nicht nur verdrehbar in dem Handstück zu halten, sondern zusätzlich auch noch in axialer Richtung verschiebbar vorzusehen, um den Ventilkörper von einem trichterförmigen Gegenstück abheben zu können. Bei einer solchen Ausführungsvariante ist im Bereich der kegelförmigen Mantelfläche des Ventilkörpers nur eine Auslaßöffnung und in dem Bereich der kegelförmigen Begrenzungsfläche des trichterförmigen Gegenstückes nur eine Einlaßöffnung vorgesehen, die zur Mengenregelung in tangentialer Richtung gegenüber einander verstellbar sind. Durch ein axiales Verstellen des Ventilkörpers unter Beibehaltung seiner Drehposition kann die Regelwirkung der miteinander zusammenwirkenden Öffnungen, nämlich der Auslaßöffnung, aufgehoben werden, wodurch dann schlagartig einem mit dem Handstück verbundenem Mundstück eine erhöhte Fluidmenge zugeführt wird, ohne daß die Einstellposition, also die Drehposition einer beispielsweise einen verdrehbar und zusätzlich verschiebbar gehaltenen Einstellring aufweisenden Einstelleinrichtung verändert wird. Bei einer solchen Ausführungsvariante sind die aktivierbaren Mittel zum zeitweiligen Erhöhen der einem Mundstück zugeführten Fluidmenge durch den verdrehbaren und zusätzlich verschiebbaren Ventilkörper und durch mit diesem Ventilkörper zusammenwirkende Bestandteile, wie eine Dichtungskappe und eine Rückstell-Druckfeder, gebildet.

## Patentansprüche

1. Zahnreinigungseinrichtung mit einem Mundstück (6) und mit einem Handstück (4), das einen Fluidkanal zum Zuführen von Fluid zu dem Mundstück (6) aufweist und das mit einer Fluidmengenregeleinrichtung (61) versehen ist, die mit Hilfe einer zwischen verschiedenen Einstellpositionen verstellbaren Einstelleinrichtung (8) einstellbar ist und mit der entsprechend den Einstellpositionen der Einstelleinrichtung (8) die durch den Fluidkanal dem Mundstück (6) zugeführte Fluidmenge veränderbar ist, dadurch gekennzeichnet, daß das Handstück (4) mit aktivierbaren Mitteln (12) zum zeitweiligen Erhöhen der dem Mundstück (6) zugeführten Fluidmenge unter Beibehaltung der jeweiligen Einstellposition der Einstelleinrichtung (8) für die Fluidmengenregeleinrichtung (61) versehen ist.

2. Zahnreinigungseinrichtung nach Anspruch 1, dadurch gekennzeichnet, daß die aktivierbaren Mittel (12) einen Zusatzfluidkanal (83, 76, 75, 67, 72, 73, 74, 94) und eine zwischen einem Sperrzustand und einem Freigabezustand umschaltbare Absperreinrichtung (32) zum Absperren und Freigeben des Zusatzfluidkanals aufweisen.

3. Zahnreinigungseinrichtung nach Anspruch 2, dadurch gekennzeichnet, daß an dem Handstück (4) eine mit der Hand betätigbare, aus einer Ruheposition in eine Betriebsposition verstellbare Verstelleinrichtung (57) zum Verstellen der Absperreinrichtung (32) vorgesehen ist und daß die Absperreinrichtung (32) bei in ihre Betriebsposition verstellter Verstelleinrichtung ihren Freigabezustand einnimmt und den Zusatzfluidkanal (83, 76, 75, 67, 72, 73, 74, 94) freigibt.

4. Zahnreinigungseinrichtung nach Anspruch 3, dadurch gekennzeichnet, daß die Absperreinrichtung (32) durch ein Kegelventil mit einem in Achsrichtung verstellbaren Ventilkörper (34) gebildet ist, dessen Ventilkörper (34) mit einer Druckfeder (36) belastet ist, die den Ventilkörper (34) in Richtung von einer Freigabeposition entsprechend dem Freigabezustand der Absperreinrichtung (32) zu einer Sperrposition entsprechend dem Absperrzustand der Absperreinrichtung belastet.

5. Zahnreinigungseinrichtung nach Anspruch 3 oder 4, dadurch gekennzeichnet, daß die Verstelleinrichtung (57) an einem in Längsrichtung des Handstückes verstellbar geführten Schieber (11) angebracht ist, d.er zwischen einer Ausschaltposition und einer Einschaltposition verschiebbar ist, und daß bei in seiner Ausschaltposition befindlichem Schieber (11) ein Umschalten der Absperreinrichtung (32) mit der Verstelleinrichtung (57) unterbunden ist und bei in seiner Einschaltposition befindlichem Schieber (11) ein Umschalten der Absperreinrichtung (32) aus ihrem Sperrzustand in ihren Freigabezustand mit der Verstelleinrichtung (57) durchführbar ist.

6. Zahnreinigungseinrichtung nach Anspruch 5, dadurch gekennzeichnet, daß die Verstelleinrichtung (57) einen Druckknopf (12) aufweist, an dem eine Druckfeder (58) angreift, die an dem Schieber (11) abgestützt ist und die den Druckknopf (12) in Richtung von der Betriebsposition zu der Ruheposition der Verstelleinrichtung belastet.

7. Zahnreinigungseinrichtung nach Anspruch 5 oder 6, dadurch gekennzeichnet, daß der Schieber (11) einen Verstellabschnitt aufweist und daß in dem Fluidkanal eine zwischen einem Sperrzustand und einem Freigabezustand verstellbare weitere Absperreinrichtung (33) zum Absperren und Freigeben des Fluidkanals vorgesehen ist, die mit dem Verstellabschnitt des Schiebers (11) umschaltbar ist, und daß bei in seiner Ausschaltposition befindlichem Schieber (11) die weitere Absperreinrichtung (33) ihren Sperrzustand und bei in seiner Einschaltposition befindlichem Schieber (11) die weitere Absperreinrichtung (33) ihren Freigabezustand einnimmt.

8. Zahnreinigungseinrichtung nach Anspruch 7, dadurch gekennzeichnet, daß die weitere Absperreinrichtung (33) durch ein weiteres Kegelventil mit einem in Achsrichtung verstellbaren Ventilkörper (35) gebildet ist, dessen Ventilkörper mit einer weiteren Druckfeder (37) belastet ist, die den Ventilkörper (35) in Richtung von einer Freigabeposition entsprechend dem Freigabezustand der weiteren Absperreinrichtung zu einer Sperrposition entsprechend dem Sperrzustand der weiteren Absperreinrichtung belastet.

9. Zahnreinigungseinrichtung nach einem der Ansprüche 6 bis 8, dadurch gekennzeichnet, daß der Druckknopf (12) in einem in Längsrichtung des Handstückes verstellbar geführten Schiebeknopf (11) aufgenommen ist und mit seinem vom Handstück (4) wegweisenden Bereich den Schiebeknopf durchsetzt.

## Claims

1. A dental cleaning device comprising a mouthpiece (6) and a grip member (4) having a fluid channel for supplying fluid to the mouthpiece (6) and having a fluid-flow control device (61) which is adjustable by means of an actuating member (8), which is movable between different actuating positions, and by means of which the amount of fluid supplied to the mouthpiece (6) through the fluid channel is variable in accordance with the actuating positions of the actuating member (8), characterized in that the grip member (4) is provided with activable means (12) for temporarily increasing the amount of fluid supplied to the mouthpiece (6) while the instantaneous actuating position of the actuating member (8)for the fluid-flow control device (61) is preserved.

2. A dental cleaning device as claimed in Claim 1, characterized in that the activable means (12) comprise an additional fluid channel (83, 76, 75, 67, 72, 73, 74, 94) and a closing means (32) which is switchable between a closed state and an open state to close and open the additional fluid channel.

3. A dental cleaning device as claimed in Claim 2, characterized in that the grip member (4) carries an actuating member (57) which is operable by hand and movable from a rest position into an operating position in order to actuate the closing means (32), and in that the closing means (32) occupies its open position and opens the additional fluid channel (83, 76, 75, 67, 72, 73, 74, 94) when the actuating member is in its operating position.

4. A dental cleaning device as claimed in Claim 3, characterized in that the closing means (32) is formed by a conical valve having an axially movable valve body (34) which is loaded by a pressure spring (36), which urges the valve body (34) in a direction from an open position corresponding to the open state of the closing means (32) towards a closed position corresponding to the closed state of the closing means.

5. A dental cleaning device as claimed in Claim 3 or 4, characterized in that the actuating member (57) is arranged on a slide (11) which is guided so as to be movable in the longitudinal direction of the grip member and which is slidable between an off-position and an on-position, and in that with the slide (11) in its off-position the closing means (32) cannot be switched over by the actuating member (57) and with the slide (11) in its on-position the closing means (32) can be switched over from its closed state to its open state by the actuating member (57).

6. A dental cleaning device as claimed in Claim 5, characterized in that the actuating member (57) includes a push-button (12) subjected to the load of a pressure spring (58), which acts upon the slide (11) and which urges the push-button(12) in a direction from the operating position towards the rest position of the actuating member.

7. A dental cleaning device as claimed in Claim 5 or 6, characterized in that the slide (11) comprises an actuating portion and in that the fluid channel includes a further closing means (33) which is movable between a closed state and an open state to close and open the fluid channel, which further closing means is switchable by means of the actuating portion of the slide (11), and in that the further closing means (33) is in its closed state when the slide (11) is in its off-position and the further closing means (33) is in its open state when the slide(11) is in its on-position.

8. A dental cleaning device as claimed in Claim 7, characterized in that the further closing means (33) is formed by a further conical valve having an axially movable valve body (35) which is loaded by a further pressure spring (37), which urges the valve body (35) in a direction from an open position corresponding to the open state of the further closing means towards a closed position corresponding to the closed state of the further closing means.

9. A dental cleaning device as claimed in any one of the Claims 6 to 8, characterized in that the push-button (12) is included in a slide knob (11) which is guided so as to be movable in the longitudinal direction of the grip member and which traverses the slide knob (12) with its part which points away from the grip member (4).

## Revendications

1. Dispositif de nettoyage des dents avec une pièce buccale (6) et avec une pièce manuelle (4) qui présente un canal à fluide en vue de l'apport de fluide vers la pièce buccale (6) et qui est doté d'un dispositif de réglage de la quantité de fluide (61) qui peut être réglé à l'aide d'un dispositif de réglage (8) réglable dans différentes positions de réglage et avec lequel, en fonction des positions de réglage du dispositif de réglage (8), la quantité de fluide amenée par le canal à fluide à la pièce buccale (6) peut être modifiée, caractérisé en ce que la pièce manuelle (4) est dotée de moyens (12) à activer en vue de l'augmentation temporaire de la quantité de fluide amenée à la pièce buccale (6) en respectant la position de réglage respective du dispositif de réglage (8) pour le réglage de la quantité de fluide (61).

2. Dispositif de nettoyage des dents selon la revendication 1, caractérisé en ce que les moyens (12) à activer présentent un canal à fluide supplémentaire (83, 76, 75, 67, 72, 73, 74, 94) et un dispositif de retenue (3i) à commuter entre un état de blocage et un état de déblocage en vue du blocage et du déblocage de canal à fluide supplémentaire.

3. Dispositif de nettoyage des dents selon la revendication 2, caractérisé en ce que le dispositif de réglage (57) actionnable à la main et réglable d'une position de repos dans une position de fonctionnement en vue du réglage du dispositif de retenue (32) est prévu sur la pièce manuelle (4) et que le dispositif de retenue (3i) adopte sa position de déblocage dans son dispositif de réglage déplacé dans sa position de fonctionnement et libère le canal à fluide supplémentaire (83, 76, 75, 67, 72, 73, 74, 94).

4. Dispositif de nettoyage des dents selon la revendication 3, caractérisé en ce que le dispositif de retenue (3i) est formé par une soupape à pointeau avec un corps de soupape (34) réglable en direction axiale dont le corps de soupape (34) est chargé par un ressort de compression (36) qui charge le corps de soupape (34) dans la direction d'une position de déblocage correspondant à l'état de déblocage du dispositif de retenue (3i) vers une position de blocage correspondant à l'état de blocage du dispositif de retenue.

5. Dispositif de nettoyage des dents selon l'une des revendications 3 ou 4, caractérisé en ce que le dispositif de réglage (57) est appliqué sur un coulisseau (11) guidé de manière réglable dans la direction longitudinale de la pièce manuelle, qui peut coulisser entre une position d'arrêt et une position de marche et que, lorsque le coulisseau 11 se trouve dans sa position d'arrêt, une commutation du dispositif de retenue (3i) est interrompue avec le dispositif de réglage (57) et, lorsque le coulisseau (11) se trouve dans sa position de marche, une commutation du dispositif de retenue (3i) de son état de blocage dans son état de déblocage peut être effectuée avec le dispositif de réglage (57).

6. Dispositif de nettoyage des dents selon la revendication 5, caractérisé en ce que le dispositif de réglage (57) présente un bouton-poussoir (12) sur lequel est appliqué un ressort de compression (58) qui est appuyé contre le coulisseau (11) et qui charge le bouton-poussoir (12) dans la direction de la position de fonctionnement vers la position de repos du dispositif de réglage.

7. Dispositif de nettoyage des dents selon l'une des revendications 5 ou 6, caractérisé en ce que le coulisseau (11) présente une section de réglage et qu'un dispositif de retenue (33) supplémentaire réglable entre un état de blocage en vue du blocage et du déblocage du canal à fluide est prévu dans le canal à fluide et peut être commuté avec la section de réglage du coulisseau (11) et que, lorsque le coulisseau (11) se trouve dans sa position d'arrêt, le dispositif de retenue (33) supplémentaire adopte son état de blocage et, lorsque le coulisseau (11) se trouve dans sa position de marche, l'autre dispositif de retenue (33) adopte son état de déblocage.

8. Dispositif de nettoyage des dents selon la revendication 7, caractérisé en ce que le dispositif de retenue (33) supplémentaire est formé par une soupape à pointeau supplémentaire avec un corps de soupape (35) réglable en direction axiale dont le corps de soupape est chargé par un ressort de compression (37) supplémentaire qui charge le corps de soupape (35) dans la direction d'une position de déblocage correspondant à l'état de déblocage du dispositif de retenue supplémentaire vers une position de blocage correspondant à l'état de blocage du dispositif de retenue supplémentaire.

9. Dispositif de nettoyage des dents selon l'une des revendications 6 à 8, caractérisé en ce que le bouton-poussoir (12) est logé dans un curseur (11) guidé de manière réglable en direction longitudinale de la pièce manuelle et pénètre dans le curseur par son extrémité opposée à la pièce manuelle (4).
